# EUROPÄISCHE PATENTSCHRIFT

(11) **EP 0 341 428 B1**
(45) Veröffentlichungstag und Bekanntmachung des Hinweises auf die Patenterteilung: **13.04.1994**
(21) Anmeldenummer: 89106196.2
(22) Anmeldetag: 07.04.1989
(51) Int. Cl.: B29C 67/22, F25D 23/06

(54) **Ventilartiges Verteilerstück zur Verbindung mit einer Wandung eines auszuschäumenden Hohlraums**
Valve-type distribution part for the connection with the wall of a foam cavity
Soupape de distribution comportant un élément de liaison à la paroi d'un espace creux de moussage

(30) Priorität: 09.05.1988 DE 3815861
(43) Veröffentlichungstag der Anmeldung: 15.11.1989
(73) Patentinhaber: LIEBHERR-HAUSGERÄTE GMBH, 88416 Ochsenhausen (DE)
(72) Erfinder: Harsch, Anton, Dipl.-Ing., D-7955 Ochsenhausen (DE); Forster, Karl, D-7955 Erlenmoos (DE)
(74) Vertreter: Gossel, Hans K., Dipl.-Ing.

(56) Entgegenhaltungen:
- EP-A- 0 289 764
- FR-A- 1 573 730
- FR-A- 2 402 138
- US-A- 4 228 820
- US-A- 4 240 999

## Beschreibung

Die Erfindung betrifft ein ventilartiges Verteilerstück mit einer napfförmigen Mischkammer, mit einem flanschförmigen Rand zur Verbindung mit einer Wandung eines auszuschäumenden Hohlraums und mit Austrittsöffnungen oder Schlitzen in der Mischkammer oder mit erhöhten sockelförmigen Teilen des flanschförmigen Randes, zwischen denen von dem Rand und der Wandung begrenzte Austrittsschlitze gebildet sind.

Ein derartiges ventilartiges Verteilerstück ist aus der nicht vorveröffentlichten und unter Artikel 54(3) EPü fallende EP-A-0 289 764 bekannt. Es wird zu einem in dieser Veröffentlichung beschriebenen Verfahren zum Ausschäumen des Hohlraums in den Wänden von wannenförmigen Behältern verwendet. Dieser Hohlraum ist zwischen Behälteraußen- und Behälterinnenwandungen gebildet und besteht vorzugsweise aus dem Hohlraum zwischen den Innenwandungen und den Außenwandungen von Kühl- und/oder Gefriergeräten. Dieser Hohlraum wird mit einem Kunststoffschaum, vorzugsweise Polyurethanschaum ausgeschäumt. Bei diesem Verfahren wird die Innenwandung auf den Kern eines Formkastens gestülpt und die Außenwandungen werden in den Formkasten eingelegt und zu der Innenwandung ausgerichtet. Sodann wird der Formkasten geschlossen und die Komponenten des ausschäumenden Kunststoffs werden durch mindestens eine verschließbare Öffnung in den äußeren Wandungsteilen in den Hohlraum eingespritzt. Anschließend härtet der sich bildende Schaum aus. Vor dem Schliessen des Formkastens wird nach dem Verfahren der europäischen Patentanmeldung in den Hohlraum zwischen die Innen- und Außenwandungen das ventilartige Verteilerstück, aus dessen Austrittsspalten die gemischten Komponenten des Schaumkunststoffs mit im wesentlichen laminarer Strömung austreten, derart eingelegt, daß es mit seiner Rückseite auf der Innenwandung abgestützt ist und mit seinem Einfüllteil in einer Öffnung im mittleren Bereich der plattenförmigen äußeren Rückwandung liegt. Vor dem Einfüllen der Komponenten des ausschäumenden Kunststoffs wird der Formkasten so gewendet, daß die Rückwandung mit dem Einfüllteil unten liegt und der Kunststoffschaum nach seiner Ausbreitung über den etwa horizontal liegenden Hohlraum der Rückwand sich aufsteigend auch über die Hohlräume der Seitenwände ausbildet. Nach einer Variante des in der europäischen Patentanmeldung beschriebenen Verfahrens wird der die Rückwand des Hohlraums bildende Karton durch den Spritzstrahl der Düse des Füllkopfes durchbohrt. Dabei tritt der Spritzstahl mit einem so großen Druck aus, daß sich nur ein kleines Durchgangsloch ausbildet, das sich nach Beendigung des Einspritzvorgangs grundsätzlich von selbst durch einen kleinen Rest zurückfließenden Kunststoffs dichtet. Dabei kann die Mischkammer noch durch einen Deckel aus einem elastischen und/oder plastischen Kunststoff mit mittlerem Kreuzschlitz geschlossen sein, der sich durch den Spritzstrahl öffnet und sich anschliessend ähnlich einem Rückschlagventil wieder schließt.

Bei dem in EP-A-0 289 764 beschriebenen Verfahren muß der Schäumkopf bis zum Aushärten des Schaumes auf der Kartonrückwand aufliegen, um einen unerwünschten Austritt von Kunststoffschaum aus dem Einspritzloch zu verhindern. Dadurch werden die Zykluszeiten zum Ausschäumen des Hohlraums verlängert.

Aufgabe der Erfindung ist es, ein ventilartiges Verteilerstück der eingangs angegebenen Art zu schaffen, mit dem sich die Taktzeiten zum Ausschäumen des Hohlraums verkürzen lassen.

Erfindungsgemäß wird diese Aufgabe durch ein Verteilerstück der mit den Merkmalen des Anspruchs 1 gelöst.

Ist durch die Einspritzdüse des Schäumkopfes die vorgesehene Menge des ausschäumenden Kunststoffs eingespritzt worden, drückt die Feder den Schließkegel des Verschlußkörpers zentrisch in das Einspritzloch hinein, so daß sich der Schließkegel dichtend an den Rand des Einspritzloches anlegt und das Einspritzloch zuverlässig abgedichtet wird. Von innen zurückdrückender Kunststoffschaum erhöht die Dichtwirkung. Sofort nach Beendigung des Einspritzvorgangs kann der Schäumkopf abgehoben und zum erneuten Ausschäumen des nächsten Hohlraumes verwendet werden, so daß sich die Herstellungstaktzeiten verringern lassen.

Das erfindungsgemaße Verteilerstück führt zusätzlich auch zu einer besseren Durchmischung der Komponenten des eingespritzten Schaumkunststoffs in der Mischkammer des Verteilerstücks, weil der aus den beiden Komponenten bestehende eingespritzte Strahl auf den Bereich der Spitze des Schließkegels trifft, so daß eine gute Verteilung der Komponenten bei guter Durchmischung der in Mischkammer erreicht wird.

Zu Beginn des Einspritzens wird der Ventilkegel unter dem Druck des Schaumkomponentenstrahles zurückgedrängt, so daß das Einspritzloch freigegeben wird. Nach Beendigung der Einspritzung wird der Ventilkegel unter der Kraft der diesen beaufschlagenden Feder wieder in seine ursprüngliche Schließstellung zuruckgedrückt, so daß das Einspritzloch in der Wandung verschlossen ist.

Zweckmäßigerweise besteht die Führung aus einem mit dem Boden der Mischkammer verbundenen Zapfen o.dgl., dessen Mittellinie im wesentlichen mit der Mittelachse der Mischkammer fluchtet, wobei auf dem Zapfen ein hülsenförmiger Ventilkegel gegen Federkraft verschieblich geführt ist.

In weiterer Ausgestaltung der Erfindung ist vorgesehen, daß der Zapfen als Hohlzapfen ausgebildet und in der Bohrung des Hohlzapfens eine Druckfeder gehaltert ist, die sich einerseits auf dem Grund dieser Bohrung und andererseits auf dem Grund der Bohrung des Ventilkegels abstützt.

Ein Ausführungsbeispiel der Erfindung wird nachstehend anhand der Zeichnung näher erläutert. In dieser zeigt
- Fig. 1: einen Schnitt durch ein mit einer Kartonrückwand eines Kühl- oder Gefriergerätes verbundenen und mit einer Zentrierplatte für einen Schaumkopf verschraubten Verteilerstücks und
- fig. 2: den Schnitt nach Fig. 1 mit in die Zentrierplatte eingeführten Schaumkopf.

Das Verteilerstück 1 besteht aus einem etwa hutförmigen Gehäuse mit zylindrischer oder sich leicht konusförmig zu seinem Boden hin verengender Umfangswandung 2, deren oberer Öffnungsrand 3 flanschförmig verbreitert ist. Die flanschförmige Verbreiterung besteht aus einem einstückig an dem oberen Rand angesetzten Ring. Auf gegenüberliegenden Seiten ist der flanschförmige Ring mit sockelartigen Erhöhungen 4 versehen, die in ihrem mittleren Bereich mit Bohrungen 5 versehen sind. Der flanschförmige Rand ist mit einer sich über die Bereiche gegenüberliegender Seiten erstreckenden nutförmigen Ausnehmung 34 versehen, deren Mittellinie durch die Gehäuseachse 6 verläuft. Über Stufen schließen sich kreisabschnittförmige Randbereiche an, in denen die erhöhten sockelartigen Teile 4 liegen. Einstückig mit dem Boden 7 des Gehäuses des Verteilerstücks ist eine napfartige Mischkammer 8 verbunden, die konzentrisch zur Gehäuseachse 6 und damit konzentrisch zu der zylindrischen oder konusförmigen Gehäusewandung 2 angeordnet ist. Die Mischkammer 8 ist in ihren Wandungen mit mehreren Bohrungen versehen, die in den Ringraum 9 zwischen den Wandungen des Gehäuses und der Mischkammer 8 münden. Die Stirnfläche des oberen Randes der Mischkammer 8 liegt mit den Stirnflächen der sockelartigen Erhöhungen 4 etwa auf einer Ebene.

Das Verteilerstück besteht zweckmäßigerweise aus einem Kunststoffspritzgußteil.

Der flanschförmige Rand des Verteilerstücks ist im Bereich der sockelartigen Erhöhungen mit zapfenartigen Vorsprüngen 10 versehen, mit denen das Verteilerstück passende Bohrungen der Kartonrückwand 11 durchsetzt. Durch die Schrauben 12, die in die Sackloch-Gewindebohrungen 5 eingeschraubt sind, ist das Verteilerstück 1 und der Zwischenlage der Kartonrückwand 11 mit der Zentrierscheibe 13 verschraubt. Die Ausgestaltung dieser Zentrierscheibe 13 und des ventilartigen Verteilerstücks sind in EP-A-0 289 764 näher beschrieben worden, so daß zur Vermeidung von Wiederholungen auf diese verwiesen wird.

Im Unterschied zu dem in EP-A-0 289 764 beschriebenen Verteilerstück ist der Boden 15 der Mischkammer 8 einstückig mit einem zentralen aufragenden Hohlzapfen 16 verbunden, dessen Mittellinie mit der Mittelachse des Verteilerstücks 6 fluchtet. Der Hohlzapfen 16 endet unterhalb des oberen Randes der Mischkammer 8. Auf dem Hohlzapfen 16 ist längsverschieblich der hülsenförmige Ventilkegel 17 geführt. Auch dieser besteht vorzugsweise aus einem Kunststoffspritzgußteil. Zwischen dem Grund der Bohrung des Hohlzapfens 16 und dem oberen Abschluß der Bohrung des Ventilkegels 17 ist die Druckfeder 18 eingespannt die bestrebt ist, den Ventilkegel 17 nach oben zu verschieben. Zusätzlich sind nicht dargestellte Sperrmittel vorgesehen, die ein völliges Abgleiten des Ventilkegels 17 von dem Hohlzapfen 16 verhindern. In der dargestellten Verschlußstellung liegt der Schließkegel 19 des Ventilkegels mit seinem Mantel an dem Rand des Einspritzloches 20 der Kartonrückwand 11 dichtend an.

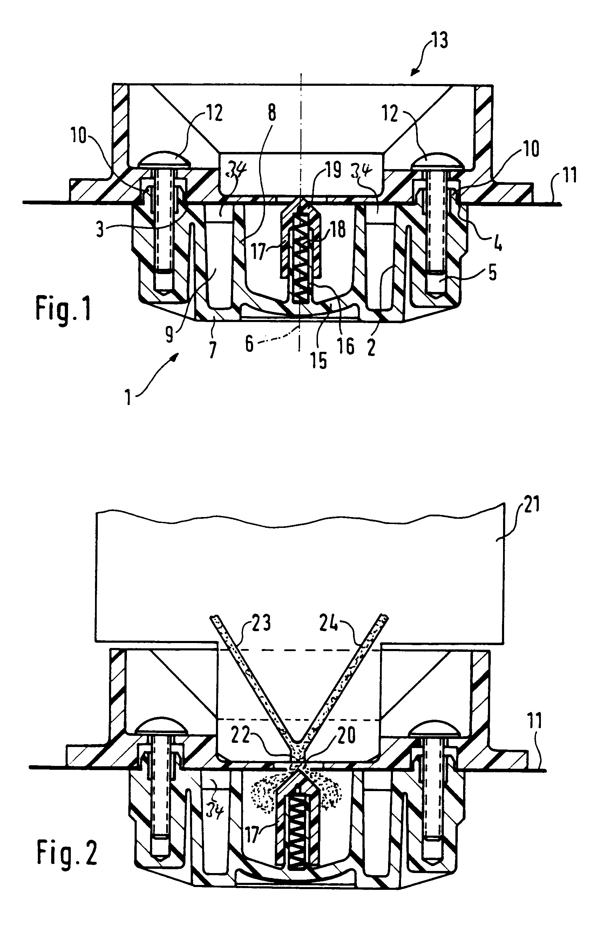

In Fig. 2 sind die Verhältnisse während des Einspritzens der Schaumkunststoffkomponenten dargestellt. Der Schäumkopf 21 ist in der dargestellten Weise in die Zentrierscheibe 13 derart eingeführt, daß die Spritzdüse 22 des Schäumkopfes 21 vor dem Einspritzloch 20 der Kartonrückwand 11 liegt. Werden nun durch die Leitungen 23, 24 unter Druck die Komponenten des Schaumkunststoffes zugeführt, weicht der Ventilkegel 17 in der dargestellten Weise unter dem Druck des eingespritzten Strahles zurück, so daß sich der eingespritzte Strahl unter guter Durchmischung in der Mischkammer verteilt.

## Patentansprüche

1. Ventilartiges Verteilerstück (1)
mit einer napfförmigen Mischkammer (8),
mit einem flanschförmigen Rand (3) zur Verbindung mit einer Wandung (11) eines auszuschäumenden Hohlraums und
mit Austrittsöffnungen oder Schlitzen in der Mischkammer oder mit erhöhten sockelförmigen Teilen (4) des flanschförmigen Randes (3), zwischen denen von dem Rand (3) und der Wandung (11) begrenzte Austrittsschlitze gebildet sind, bei dem,
die Mischkammer (9) im Bereich ihrer Mittelachse (6) mit Führungen für einen Ventilkegel (17) versehen ist, dessen Schließkegel (19) nach Verbindung des Verteilerstücks (1) mit der Wandung (11) durch eine Feder (18) gegen das Einspritzloch (20) der Wandung (11) angedrückt ist.

2. Verteilerstück nach Anspruch 1, dadurch gekennzeichnet, daß die Führung aus einem mit dem Boden (12) der Mischkammer (8) verbundenen Zapfen (16) o.dgl. besteht, dessen Mittellinie im wesentlichen mit der Mittelachse (6) der Mischkammer (8) fluchtet.

3. Verteilerstück nach Anspruch 2 dadurch gekennzeichnet, daß der Zapfen (16) als Hohlzapfen ausgebildet und in der Bohrung des Hohlzapfens eine Druckfeder (18) gehaltert ist, die sich einerseits auf dem Grund dieser Bohrung und andererseits auf dem Grund der Bohrung des Ventilkegels (17) ab stützt.

## Claims

1. Valve-type distribution part (1) with a cup-shaped mixing chamber (8); with a flange-shaped rim (3) for connecting to a wall (11) of a cavity to be foam-filled; and with discharge orifices or slits in the mixing chamber, or with elevated plinth-shaped parts (4) of the flange-shaped rim (3) between which discharge slits delimited by the rim (3) and the wall (11) are formed; wherein the mixing chamber (9) is provided, in the region of its centre axis (6), with guides for a valve cone (17), the closing cone (19) of which, after connection of the distribution part (1) to the wall (11), is pressed by a spring (18) against the injection hole (20) of the wall (11).

2. Distribution part according to Claim 1, characterised in that the guide comprises a pin (16) or the like which is connected to the base (12) of the mixing chamber (8) and whose centre line is essentially aligned with the centre axis (6) of the mixing chamber (8).

3. Distribution part according to Claim 2, characterised in that the pin (16) is designed as a hollow pin and a compression spring (18) is mounted in the bore of the hollow pin, which compression spring is supported on the one hand on the base of this bore and on the other hand on the base of the bore of the valve cone (17).

## Revendications

1. Pièce de distribution (1) en forme de soupape, avec une chambre mélangeuse (8) en forme de godet, avec un bord à épaulement (3) pour la liaison avec une paroi (11) d'un espace creux à remplir de mousse et avec des ouvertures de sortie ou des fentes dans la chambre mélangeuse ou avec des pièces surélevées (4) en forme de socle du bord à épaulement (3), entre lesquelles sont formées par le bord (3) et la paroi (11) des fentes de sortie délimitées, dans laquelle la chambre mélangeuse (9) est pourvue au voisinage de son axe médian (6) de guidages pour un cône de soupape (17) dont le cône de fermeture (19), après avoir relié la pièce de distribution (1) à la paroi (11), est poussé par un ressort (18) contre le trou d'injection (20) de la paroi (11).

2. Pièce de distribution selon la revendication 1, caractérisée en ce que le guidage est constitué d'un pivot (16) ou analogue relié au fond (12) de la chambre mélangeuse (8) et dont la ligne médiane est sensiblement alignée avec l'axe médian (6) de la chambre mélangeuse (8).

3. Pièce de distribution selon la revendication 2, caractérisée en ce que le pivot (16) est réalisé sous forme de pivot creux, et que dans le perçage du pivot creux est logé un ressort de pression (18) qui prend appui d'une part sur le fond de ce perçage et d'autre part sur le fond du perçage du cône de soupape (17).
